# EUROPEAN PATENT APPLICATION

(11) **EP 1 178 450 A2**
(43) Date of publication of application: **06.02.2002**
(21) Application number: 01114153.8
(22) Date of filing: 25.10.1995
(51) Int. Cl.: G07F 19/00

(54) **Real time tele-payment system**

(30) Priority: 28.10.1994 FI 945075
(62) Divisional of application: 95935472.1
(71) Applicant: Vazvan, Behruz, 00420 Helsinki (FI)
(72) Inventor: Vazvan, Behruz, 00420 Helsinki (FI)

(57) **Abstract**

This invention is a real time mobile payment system and a method that relates to the payments and bills of the mobile users and providing the mobile users with the information about their accounts, account balance, the statement of account, or the movement on the account and other required messages by using their mobile terminals (1, 6) under any wireless telecommunication system. According to one embodiment of the invention short message service facilities of at least one mobile wireless communication network (4) or a digital cordless communication system (5) are utilized through which user mobile terminals (1, 6) can send and receive to or from remote computing stations (2) payment messages and/or at least messages about the account balance, the statement of account, or the movement on the account of said mobile terminal's subscriber or user, and communicating banking, payment, and/or commerce related and other required messages. The system in one of its embodiments characterized in that means are provided for encrypting/decrypting and completely securing messages communicated between a mobile terminal (1, 6) and/or a identity module (10, 21, 39, 42) such as SIM (Subscriber Identity Module) or equivalent and a computing station using a security algorithm.

## Description

This invention is a real time mobile payment system that relates to the payments and bills of the mobile users and providing the mobile users with the information about their accounts, account balance, the statement of account, or the movement on the account and other required messages in a real time basis by using their mobile terminals under any wireless telecommunication system.

### BACKGROUND OF THE INVENTION

There are several mechanical and electronical payment systems for retail business operations like, for example, what is introduced by US patent US-A-5 202 825, in which a hand-held data terminal generates a record of purchases made by a customer for charging a customer in accordance with customer-indicated payment preferences. In these systems the waiter sends by use of a data terminal the customer's order to a customer service station which is a typical cash register based in the restaurant. These systems reduce the time requirements for processing customers at check-out counters in comparison with those of more traditional check-out procedures of the recent past. These systems are only for sending the customer order to the cash register in the retail business.

On the other hand in the fixed telecommunication networks a user (subscriber) can be connected from his personal computer to his/her bank via telephone lines and thereby pay his/her bills. In such systems user must use a data modem between his/her computer and the telephone wire. Another disadvantage of such systems is that in order to pay his/her bills, user must have access to his own personal computer connected through his telephone line to the fixed telephone infrastructure, therefore user mobility in such systems is completely limited. On the other hand in the existing telephone banks when a telebank is called, the computer identifying the DTMF-voice frequency signals available through the telephone network i.e. the central voice applications platform (the CVAP) answers and the caller talks with the CVAP by pushing certain keys suggested by a predetermined program. A considerable problem in such systems is that no payment or any equivalent value or code is sent from the user terminal to the central system for charging the users in real time for the connection time or data messaging. Moreover, no payment or its equivalent value is transferred by the user's terminal to an account for user's mobile bills or commerce. Another considerable problem in such systems is that no data is visualized in user's mobile terminal to allow user to input or select an item, and no real time data messaging technique is adapted for users' bill payments and banking issues but users must listen to an instruction, during a call, and then by pushing certain keys pay a bill without seeing any data, and then cut off the connection which also is not charged in real time.

The published WO 94/11849 discloses a payment system which uses the GSM-network user's A-number for user authentication when a call is set up to service providers. In order to register the telephone to the network the user is first authenticated in the authentication center of the GSM network when he enters his PIN-code, as is well known. Then the payer selects the transmitter of the transaction, e.g. a bank, a credit company, based on which a call is placed to the transmitter's payment system. In the call set-up, the subscriber is identified using the subscriber A-number. The caller's A-number identity is used to administrate the user's rights and to connect the user to the service.

According to the publication in telephone (i.e. voice) banking services the terminal is a standard GSM telephone. According to the description and claims of the publication when a telephone alone is used an audio connection is taken from the telephone for banking services. In data-based banking services the terminal is a normal computer linked to the GSM telephone e.g. Motorola MicroTac-phone serial port by means of cable. No data is controlled neither displayed by said telephone itself. The banking services are handled by calling transmitter's payment system, forming a connection with said system, giving the amount to be paid, confirming the amount, approving the payment, giving the payment an identification number, producing a receipt of the transaction to the customer, recording the transaction in the seller terminal and in the payment system, and after that charging the telephone connection time, and cutting off the connection. As it is clear to a person skilled in the art the publication presents the method of the GSM system where subscriber's A-number is used to authenticate a user in the call set-up in accordance with the GSM system standards.

A considerable problem in the method and system explained in WO 94/11849 is that no data is controlled by said telephone neither said data is displayed on the screen of said telephone but for data-based banking a personal computer is used which is connected to a standard GSM-telephone's serial port. Therefore, for data services, the user terminal is comprised of a normal personal computer connected by cable to a GSM telephone whereby a data call is made to the bank. The telephone disclosure of said publication is not arranged with means to control and display required data messages for bill payment transaction and mobile commerce, neither a method for securing said messages. Another considerable problem in said system is that no transaction is encrypted end to end neither digital signatures techniques used for user authentication and securing the transactions. The publication does not provide a wireless and modemless data messaging solution neither methods for improving such technologies, as it is provided by the present invention. Furthermore, the method and system of said publication dose not disclose a user authentication method based on utilizing short data messaging. The publication does not specify a specific applications and client module for running banking, commerce and other applications and securing the messages, as the present invention provides. Moreover, in the method and system of said publication no smart card or accounts are arranged to be charged in real time for users communications or service being in use, neither any payment is transferred from said terminal to a user account. According to the system of publication WO 94/11849 the telephone connection is only charged using the traditional billing systems and after the transaction has been completed and a receipt has been produced for the customer. Therefore, problems of bad debit are not solved by the invention of WO 94/11849 because the user account is not charged in real time. Other inefficiencies of the system presented in said publication is that it does not provide an interactive real time messaging system and method for running applications and requesting information, such as account information or any other messages by means of a mobile terminal and by sending request messages, that are structured and displayed in said mobile terminal in a user friendly format, to the remote computing stations for retrieving the information required and displaying in user's mobile terminal. The publication presents the GSM system's authentication method wherein the subscriber's A-number is used to authenticate the subscriber in a call set-up, while in the present invention messages are also encrypted and secured using any security algorithms and any users codes to securely identify the users and encrypt messages.

Mobile terminals have limited resources that should be used efficiently. Therefore for data services terminals and services should be specifically designed to allow introduction of services via resource limited mobile terminals. In GSM and other mobile systems the standard data communication is designed to be used for one way data transmission using fax devices or personal computers connected by means of cable to a mobile telephone i.e. no data is arranged to be handled and displayed by a mobile terminal neither any cordless means and environment is arranged in connection with user's mobile terminal in order to communicate with other devices without using any cable connections between said terminal and other devices. Furthermore, before this invention the messaging facilities of the existing mobile systems and terminals, such as GSM, were limited to the basic SMS techniques so that the user was allowed to send and receive only to/from other mobile users at most a 160 characters short message each time. Another problem with the basic SMS services is that the messages sent, received or displayed are not structured in an user friendly format, to present inquiries, menus enabling users to input or select an item, but the messages are communicated using standard GSM terminals without any especial design and operations. While SMS is a point-to-point short message service it is not arranged to carry out messaging in real time but message formats are specified for one way communication without taking into account the need for possible responses, results of queries etc. Furthermore, before the present invention short data messaging was not utilized and adapted for bill payment and mobile commerce. The basic SMS is not arranged for banking, retail and commerce businesses neither to provide interactive services. Before this invention mobile terminals and smart cards were not arranged with means for digitally encryption and decryption of messages to provide secure messaging between a mobile user and a remote computing station. Furthermore, smart cards (SIM) were not arranged with means to control a user interface for controllable menus and inquiries, for real time sending and retrieving information and performing mobile commerce.

There continues to exist a need to further improve the efficiencies of payment and messaging systems. The system and method according to the subject invention provides preferable solutions to the above mentioned problems.

### ADVANTAGES OF THE INVENTION

A solution to the posed problem of the invention is defined in the independent claims. Preferred embodiments and other features of the invention are defined in the dependent claims. In one embodiment of the present invention a real time payment system and method is provided for charging the mobile users in real time, as the time and call/service is going on, for their mobile bills. In another embodiment of this invention a system and method is provided to allow users of mobile terminals to display, send and receive bills, payments, account information, structured inquiries, menus, and other messages (e.g. 11), for banking, commerce, retail and the like businesses, to/from computing stations via wireless messaging means of a digital mobile or cordless system without using any data modem in connection with said terminal. In one embodiment this invention provides a generic message format making short messaging a real time application messaging system. According to one embodiment of the present invention the user mobile terminal is arranged with a client module that communicates with a computing station over a digital mobile or cordless communication system to allow service providers, commerce, banks, retail and the like businesses to provide their services to users in a user friendly manner. In the present invention the users are allowed to set up interactive communications with computing stations by sending request codes and messages that are structured and displayed in an efficient and user friendly format 11, a menu, to allow a user to select and input an item, send a message, a code (e.g. 33) to said computing station wherein the information required, e.g. the statement of an account, bills, commerce related messages, are retrieved in real time and sent to said users' mobile terminals. A structured user friendly menu 11, 33, an inquiry is displayed for user that allows user to select, input, and activate a required item and whereupon communicate via a wireless system with a remote computing station, send and receive messages. Another aspect of the present invention is that user is allowed by means of his mobile terminal to send and receive the required amount of payment, to send the payment to the payee's account or terminal, to transfer the payment from a smart card, mobile payment part, to a payee's account or terminal and to store the payment in said smart card (SIM or equivalent). Yet, in another embodiment of the present invention messages communicated between said mobile terminal, mobile payment part and computing stations are secured and encrypted using security algorithms and any necessary codes to provide a complete secure system. In another embodiment of the present invention a wireless messaging communication system is provided wherein the users' mobile terminal, a computing station and other terminals are allowed to send and receive long data information such as account statements via short messaging means. In this invention the user mobile terminal and the computing stations are further arranged with means to combine short messages or divide long data information to several parts, and to send them to a terminating system or terminal enabling said terminal to control and structure said messages and display said messages and data information for user through a display of said terminal. Yet, another advantage of this invention is that the user terminal is arranged to operate both as a digital mobile terminal via digital mobile networks and as a digital cordless terminal via a digital cordless system (e.g. a restaurant's, a shop's etc. cordless system). According to another aspect of this invention said user mobile terminal and smart card (SIM) are arranged to display, receive, send, store and control at least one structured inquiry or menu 11, 33 allowing said user to select an item, input or accept an item wherein said inquiry or menu in one embodiment has at least one question and answering field. According to another embodiment of this invention a smart card (SIM), operable in a mobile terminal, comprises controlling means and means to secure, send, receive, and store short data messages, menus, inquiries and means to allow the user to select and input an item and whereby to set up real time interactive wireless and modemless messaging through a user mobile terminal with at least one computing station. Other preferred embodiments of the invention are defined in claims of this invention.

### DESCRIPTION OF THE INVENTION

In order to serve such current needs, the present invention provides a new and unique mobile payment and messaging system. In the inventive system a mobile terminal can be used in order to pay bills or transfer money or request information, for example account information. Certain features of the invention are intended as an expansion of value-added services of currently existing mobile communications systems. This invention addresses needs created by users mobility. For example, suppose that you are traveling and you want to pay a certain bill or transfer some amount of money to a person's account but you do not have time for going to the bank or the bank may be closed and you may neither have access to your personal computer (which can be connected to the bank via telephone wire). This invention provides you the possibility to pay your bills in an convenient and user friendly way, by using your mobile terminal while you are in move, regardless of weather the banks are closed or not, regardless of weather it is night or weekend etc. This invention also provides the retail businesses (for example restaurants, shops, etc. and other service providers) the possibility to charge their customers, via mobile telecommunication networks, by using their mobile terminals. For example, a waiter in a restaurant, after having entered the amount of payment or the customer's information (like account number etc.) to his/her mobile terminal sends the payment information to the inventive computing station. In the computing station either the customer's account can be charged or the payment amount received from the waiter's mobile terminal can be transferred to the restaurant's account. The most important advantage gained by the inventive system is that all mobile telephone users (subscribers etc.) can pay their bills by using their mobile telephones (in which the inventive mobile payment part is included) and user identity or codes, without requiring any data modem, personal computer, and conventional debit or credit cards etc. In this invention the user identification module and user identity and codes can function as the user's credit card enabling secure payment transactions and messaging.

By implementing the inventive mobile payment system a mobile user (subscriber etc.) can pay all his/her bills and handle all his/her banking issues where ever under the coverage of a mobile communications network. These and other improvements and advantages are realized by providing a system, a method, a mobile terminal (including the inventive mobile payment part) and a computing station. The present invention will now be described by way of examples with reference to the accompanying drawings, in which:

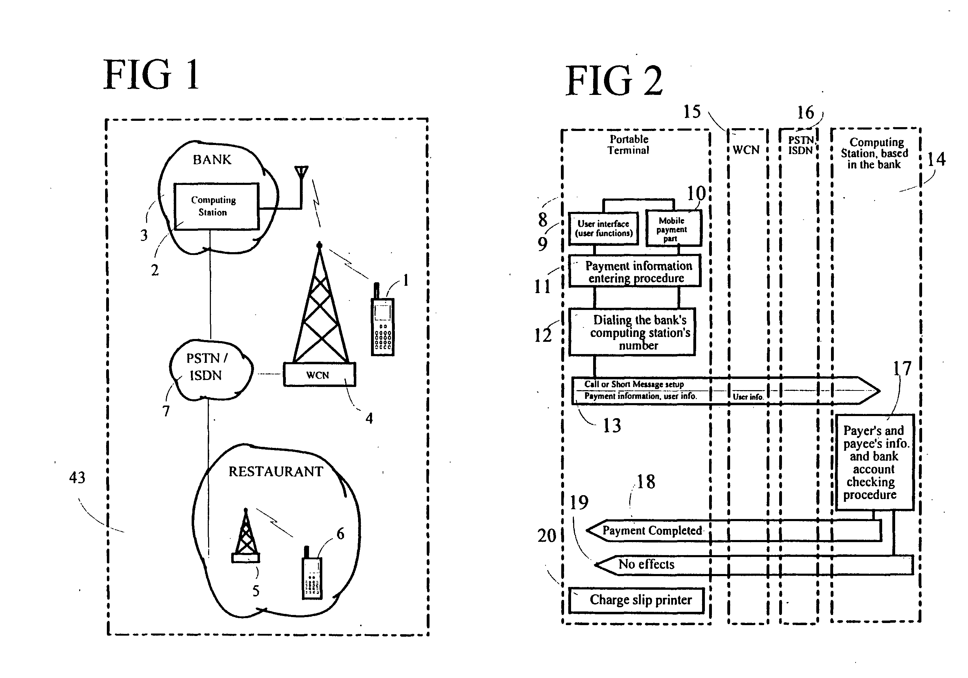

**Fig. 1** is a schematic representation of the inventive Real Time Tele-payment System 43.

**Fig. 2** represents, as an general example, a payment flow diagram between the mobile terminal and the computing station, located in the bank 3.

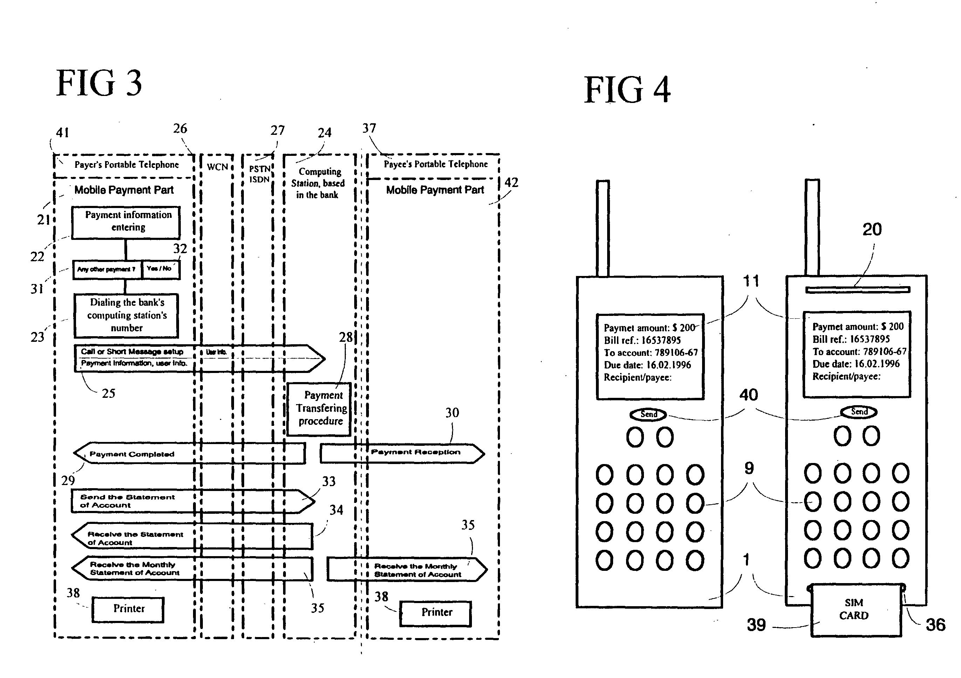

**Fig. 3** represents, as an general example, a payment flow diagram in which a mobile user pays his/her bills or request the statement of account or other information by using his mobile terminal. In this figure also the payee is informed about the reception of a payment.

**Fig. 4** is a schematic representation of two type of mobile terminals: one is a mobile telephone that includes the inventive mobile payment part 10. The other one is a mobile terminal that uses the inventive mobile payment part in a user-friendly smart card 39, includes a charge slip printer and a user-friendly (SIM etc. smart cards) card reader (SIM: Subscriber Identification Module).

When a mobile user wants to pay a bill or transfer money to his account or other, he can enter all information required for payment (like his account number, the payee's account number, payment's due date, bill's reference number, etc.) to his mobile terminal 1 (for example through the keypad). As it is the object of this invention, the user's own account information dose not need to be entered if the computing station 2, can identify the calling party. This needs that the user information (identity) should be confirmed by his/her telephone operator or service provider, for example, in the mobile communications network 4 and then be sent to the bank as a confirmation of user (subscriber) identification. User identity can be sent by user's mobile terminal, telephone operator or service provider to the computing station 2.

Monitoring a calling party's number or information at a receiving terminal is a feature provided by today's digital telephone systems. In this invention, in order to implement such procedure, for example the switching systems at the mobile network side can be used so that only when a user sets up a call or sends a message (by using short messaging means of the mobile communications systems) to the computing station 2 his/her identity can be monitored in the computing station 2 in order to identify who is the calling party. Therefore, in this invention the computing station 2 can receive at least the confirmed user identity via the user's telephone operator or service provider of a mobile communications network 4 in order to identify who is in charge for payment of bills sent by mobile terminal 1. Other required information like passwords or access codes to the user's bank account can be sent by user through his/her mobile terminal 1.

In today's mobile communication systems the user identity, included in his/her SIM card, is checked and confirmed by network 4 every time his/her mobile terminal 1 is turned on and attached to the telephone network 4. In this invention the user identity, transmitted from the mobile terminal 1 to the network 4, can be completely encrypted and secured and also the payment messages between mobile terminal 1 and computing station 2 are quite secured because of: first, the security algorithms used in said digital mobile telecommunication system and mobile telephone, and secondly, because of the user's password or access codes used for payment messages in the inventive mobile payment system. All kind of wireless communications networks can be used in order to communicate the payment and bill messages between the mobile terminal and computing station. For example, if in a restaurant there is a cordless system like DECT (Digital European Cordless Telephony) 5 the user terminal 6 can be connected through such cordless system and PSTN (Public Switched Telephone Network) or ISDN (Integrated Services Digital Network) 7 to the computing station 2.

The payment question-answering procedure between the user and his mobile terminal 8 is entered by using the user interface 9 and received and handled by the inventive mobile payment part 10, 39. The bill and payment information entering procedure 11 is an interactive procedure between the mobile payment part 10 and the user through a user interface 9. Then, the computing station's number is dialed (activated) 12 (either automatically or by user) which after the mobile terminal 8 sends the required information for call set-up to the mobile network 15 and then payment messages 13 to the computing station 14 via the network 15. If the user identity or codes are not sent from the user mobile terminal 8 to the computing station 14, then the mobile network 15 confirms and sends the user identity to the computing station 14 either directly or through the fixed public network 16. The computing station 14 checks the calling party's account and account number of payee (the account to which the payment should be transferred) and then transfers the received amount of payment to the payee's account or terminal or charges the payer's account 17, 28, 30. Then the computing station 14 sends a short message 18 to the mobile terminal 8 indicating "payment completed" or if there is not enough credit (money) in the payer's account a "No effects" message 19 is sent to the user mobile terminal 8, meaning that the payment can not be performed. For retail businesses, mobile terminal includes also a charge slip printer 20. If the mobile terminal receives a "payment completed" command 18, the charge slip printer 20 prints a receipt for the customer. In this invention, for example, for the retail and trading businesses, the customer's SIM (or other smart card) 39 is entered in the card reader 36 of mobile terminal 1 (of a waiter in a restaurant, for example, if user doesn't have his own terminal) temporary in order to pay the bill. The account number of payee (for example account number of the restaurant) can be stored in the memory of his/her mobile terminal in order to reduce the information entering procedure. This means that only the payment amount should be entered to the terminal. After that the payment amount has been entered to the mobile payment part 10 and the computing station's 14 number has been dialed, the mobile network 15 sends the customer's identity, which can be the subscriber identity or a different code (a code different than that of subscriber identity, number etc.) to the computing station 14. The computing station 14 can identify the calling party (the payer) because it can receive the calling party's identity from the network 15 and compare with the calling party's identity based in the computing station 14, when required. Therefore the payment amount received from the mobile terminal 8 is transferred to the payee's account. The user identity sent from the mobile network 15 to the computing station 14 can be different than the user's, identity sent by the mobile terminal 8 to the mobile network 15 but both of these identities can belong to one user (subscriber). Alternatively the payer's, identity or codes, included in his/her (SIM) card 39 or entered to the mobile terminal by using user interface 9, can be sent directly from the mobile terminal 8 to the computing station 14. It should be understood that for the simplicity of the description, messages for outgoing call set-up and incoming call or short messages services procedures are not explained with details since these procedures are already well known in the mobile communications systems.

Following is an example, in which a mobile user pays his/her bills or transfers money to his/her or other person's account, or requests the computing station for statement of account, by using his/her mobile terminal.

First, the payer enters the bill's information 22 (for example: account number of payee, the amount of money which should be transferred, due date of the bill, reference number 11) to the mobile payment part of his/her mobile terminal 41. Then, after activating an OK function by user the number of the computing station 24 is used and the mobile terminal sends the payment information 25 to the computing station 24 via a mobile communications network 26 and a fixed network 27. Then, computing station 24 transfers the amount of payment, on the bill, to the payee's account 28. Then, computing station 24 sends a "Payment Completed" short message 29 to the mobile terminal. If the payee has also a mobile terminal 37, then his/her mobile terminal 42 can receive a "Payment Reception message" 30, from the computing station 24, indicating the amount of payment, the payer and the payment date. However, before dialing (activating) the number of computing station the mobile payment part may ask the payer (the user of mobile terminal) "Any other payment ?" 31. The answer can be respond by activating for example "Yes/No" function 32 or an OK function of the mobile payment part 21. Then the user can enter another bill information to his terminal (mobile payment part) and when all information required has been provided, the required number can be dialed (activated). After this, all bills information (payment messages) are sent to the computing station 24 as explained above. Furthermore, for requesting information such as account balance, the statement of account, or the movement on the account from the computing station 24, there is a code under a user friendly command name such as "send the statement of account" or the like 33. When user selects such a command 33, the mobile payment part 21 sends a message either by setting up a call or by using short message facilities of a mobile communications network 26 to the computing station 24 as a request for account information. Then computing station 24 sends the required account balance or the statement of account 34 to the mobile terminal 41. The computing station 24 is also arranged to send for example a "Monthly Statement of Account" 35, to the mobile terminals 41, 42 for example once or twice per month. Then mobile terminal's printer (38) can print it for the user to be filed as a record, if required.

Following is an example in which the payee (for example a restaurant or a retail seller) has a mobile terminal by which the payer (a customer) can be charged.

Suppose that a customer wants to pay his/her bill in a restaurant for the service he/she has received. The customer can give his/her smart card SIM or the like smart card 39 to the waiter to be entered to the waiter's mobile terminal 6, 8. Then waiter dials (activates) the number of computing station 14, or the number is dialed (activated) automatically after the customer's card 39 has been read by card reader 36 of the waiter's mobile terminal. For example the number of computing station 14 can be stored in the memory of waiter's mobile terminal, and every time a customer's smart card (SIM) is entered to the mobile terminal 1, 8, the terminal automatically contacts the computing station 14. The computing station 14 either transfers the received payment or checks the account information of payer (a customer) and then transfers the transaction amount (the sum on the bill) to the payee's (the restaurant's) account 17. If the payer's account do not have enough credit (money) the mobile terminal 8 may receive a "No effects" message 19, from the computing station or the computing station's operator (e.g. bank) may pay the transaction's amount on behalf of the payer and then later charge the payer or his/her bank for the prepaid transaction. On the other hand if the payer's account information (account number, account identity) is false the computing station 14 may send a "transfer not accepted" message to the payee's mobile terminal, which means that the payer (customer) should pay the amount of transaction in cash as explained in the previous examples. If the mobile terminal receives from the computing station 14 a "payment completed" short message 18, then the charge slip printer 20 prints a receipt for the customer, as explained in the previous example.

It should be considered that in all above-mentioned examples, bill and payment and other messages can be sent and received both by setting up a call or through the short messaging means of the wireless communication networks.

In the current mobile communications systems, like GSM, there is a facility called "Short Message Services, (SMS)". In SMS a mobile telephone user can send a short message to another subscriber without setting up an interactive communication. In order to send the bill, payment and other messages by SMS, the software of SMS installed in the user mobile terminal can be modified so that it can also handle the parameters and/or commands of the inventive mobile payment part. By using the short messaging means of a mobile communications network 15, the bills, payment and other information can be sent and received to/from the computing station. When computing station receives e.g. a bill or payment message 13 via SMS, it also sends a message to the mobile terminal in order to inform it if the payment has been completed 18 or not 19. However, if a user wants to enter and send many payments/bills at once and receive also balance or statement of his/her bank account and the like information from the computing stations, such long message can be divided to smaller parts and then be combined at the mobile terminal or computing station. This means that e.g. each bill information can be sent for example separately through short messaging. This action is transparent to the user of the mobile terminal. For example several bill and payment information can be entered to the user terminal. Then when user selects the "Send" function 40 on the mobile terminal 1, each bill can be sent by one short message in accordance with the short messages' lengths. For example, suppose a short message may not include more than 100 characters. If the bill and payment messages or the statement of account (sent by computing station) or other information needs more (space) than the assumed 100 characters, then such long information is divided into two or several short messages and then is sent one by one or all at once to the mobile terminal or computing station. By utilizing this inventive method, user's mobile terminal can send and receive long data information without using modems or data cards.

In this invention said computing station can send and receive messages via PSTN (Public Switched Telephone Network) and ISDN (Integrated Services Digital Network) and other fixed networks or via only a mobile or cordless communications network. The computing station includes all means for handling, transmitting and receiving payment and banking messages via the wireless networks.

## Claims

1. A mobile payment system for bill payment of mobile users and/or providing users with means for mobile banking, commerce, trading, and/or sending and receiving information, the system comprising:
- at least one mobile terminal (1, 6, 8, 37, 41) using at least one subscriber/user identity module (SIM or equivalent smart card 10, 21, 39, 42), said terminal and/or said subscriber/user identity module comprising means for encryption/decryption and digitally securing messages communicated between said terminal (1, 6) or said smart card (10, 21, 39, 42) and at least one computing station (2) using a security algorithm, said terminal and/or smart card further comprising means for short messaging (SMS);
- at least the one computing station (2, 14, 24) located in a bank (3) or any other required places, said computing station comprising means for encryption/decryption and digitally securing messages communicated between said terminals (1, 6) and/or said smart card (10, 21, 39, 30, 42, mobile payment part) and said computing station using a security algorithm;
- short message service facilities of at least one mobile wireless communication network (4) or a digital cordless communication system (5) through which said mobile terminal can send and receive to or from said computing stations payment messages and/or at least messages about the account balance, the statement of account, or the movement on the account of said mobile terminal's subscriber or user, and communicating banking, payment, and/or commerce related and other required messages;
whereby:
means are provided for encrypting/decrypting and completely securing messages communicated between said mobile terminal or said identity module and said computing station using a security algorithm.

2. A mobile payment system according to claim 1, **characterized in that** before sending messages from said mobile terminal or said smart card to said computing station said messages are encrypted and completely secured using a security algorithm in said smart card (10, 21, 39, 42) or in said mobile terminal (1, 6, 8, 37, 41).

3. A mobile payment system according to any preceding claim, **characterized in that** messages received by said mobile terminal or said smart card or computing station are decrypted using said security algorithm.

4. A mobile payment system according to any preceding claim, **characterized in that** messages received by said computing station are decrypted, checked and users are authenticated by digital signatures.

5. A mobile payment system according to any preceding claim, **characterized in that** messages communicated between said mobile terminal or said smart card and said computing station are encrypted/decrypted and completely secured using said security algorithm and a user codes.

6. A mobile payment system according to any preceding claim, **characterized in that** in said system at least bills, banking, commerce and account information and other related messages, menus and inquiries are, as much as required, arranged and displayed (11, 33) for user through the screen of said mobile terminal (1, 6) to allow said user to see, accept, select and input an item or any required information and to send and receive said messages to/from said computing stations and other terminals without using any data modem with said mobile terminal, and that said system further comprises means for allowing said user using said terminal (1, 6) to have real time interactive messaging with said computing station by sending at least one request code, a message (11, 33) to said computing station, said codes and information (11, 33) are either sent by said computing station to said terminal or accessed by user from said terminal or its smart card's (SIM or equivalent) memory and displayed for user in a structured user friendly format (11, 33), said codes and/or information presented under command names like "statement of account, account balance" (11, 33) or the like, said codes referring to commerce and information units like account balance, statement of account, banking, retail, trading, purchase, bill payment and other required messages, accessible and/or purchasable from/through said computing stations, and means for transmitting said requested information (11, 34) to said terminal.

7. A method in a mobile payment system, the system according to any preceding claim, **characterized in that** messages communicated between said mobile terminal and said computing station are encrypted/decrypted and completely secured by said mobile terminal (1, 6, 8, 37, 41) or said identity module (10, 21, 39, 42) and said computing station (2, 14, 24) using a security algorithm.

8. A method according to claim 7, **characterized in that** before sending messages from said mobile terminal or said smart card to said computing station said messages are encrypted and completely secured using said security algorithm in said smart card (10, 21, 39, 42) or in said mobile terminal (1, 6, 8, 37, 41) producing at least one digital signature.

9. A method according to any preceding claim, **characterized in that** messages received by said mobile terminal or said smart card or computing station are decrypted using said security algorithm.

10. A method according to any preceding claim, **characterized in that** messages communicated between said mobile terminal or said smart card and said computing station are encrypted/decrypted and completely secured using a security algorithm and a user codes; and that messages received by said computing station are decrypted, checked and users are authenticated by digital signatures.
